Europäisches Patentamt

European Patent Office

Office européen des brevets

(11) Veröffentlichungsnummer : **0 494 180 B1**

(19)

(12) # EUROPÄISCHE PATENTSCHRIFT

(45) Veröffentlichungstag der Patentschrift :
**14.12.94 Patentblatt 94/50**

(51) Int. Cl.⁵ : **F16J 1/02,** F02F 3/02

(21) Anmeldenummer : **90913797.8**

(22) Anmeldetag : **20.09.90**

(86) Internationale Anmeldenummer :
**PCT/EP90/01600**

(87) Internationale Veröffentlichungsnummer :
**WO 91/04429 04.04.91 Gazette 91/08**

(54) **KOLBEN FÜR EINEN VERBRENNUNGSMOTOR.**

(30) Priorität : **25.09.89 DE 3931949**

(43) Veröffentlichungstag der Anmeldung :
**15.07.92 Patentblatt 92/29**

(45) Bekanntmachung des Hinweises auf die
Patenterteilung :
**14.12.94 Patentblatt 94/50**

(84) Benannte Vertragsstaaten :
**AT BE CH DE DK ES FR GB IT LI LU NL SE**

(56) Entgegenhaltungen :
**EP-A- 181 652**
**EP-A- 275 935**
**EP-B- 171 568**
**DE-A- 3 418 454**

(73) Patentinhaber : **ALCAN DEUTSCHLAND GMBH**
**Hannoversche Strasse 1**
**D-37075 Göttingen (DE)**

(72) Erfinder : **BÖHM, Gerhard**
**Bachwiesenstrasse 28**
**D-8501 Rosstal-Grossweismannsdorf (DE)**
Erfinder : **KOFAHL, Klaus**
**Schlartäckerweg 10**
**D-7056 Weinstadt (DE)**

(74) Vertreter : **Füchsle, Klaus, Dipl.-Ing. et al**
**Hoffmann, Eitle & Partner,**
**Patentanwälte,**
**Postfach 81 04 20**
**D-81904 München (DE)**

EP 0 494 180 B1

## Beschreibung

Die Erfindung bezieht sich auf einen Kolben für einen Zylinder eines Verbrennungsmotors mit
- einem mit zumindest einer Kolbenringnut versehenen Kolbenkopf, und
- einem eine Kolbenbolzenbohrung besitzenden Kolbenschaft, welcher einen größten Durchmesserbereich aufweist.

Ein Kolben eines Verbrennungsmotors ist in bekannter Weise über eine Pleuelstange mit einer Kurbelwelle verbunden und wird in einer hin- und hergehenden Bewegung in einem Zylinder geführt. Bei dieser Bewegung des Kolbens erreicht dieser vor einer Bewegungsumkehr jeweils einen oberen bzw. unteren Totpunkt, in welchem sich, bedingt durch die Änderung der Bewegungsrichtung des Kolbens die Seite ändert, mit welcher der Kolben an der Zylinderwand anliegt. Die hierbei von dem Kolben durchgeführte Kippbewegung erfolgt um die Achse des Kolbenbolzens, mit welchem der Kolben mit dem Pleuel verbunden ist.

Die beschriebene Kippbewegung des Kolbens führt, bedingt durch die hohen Drehzahlen des Motors, zu einem relativ starken Anschlagen des Kolbens an den jeweiligen Bereich der Zylinderwandung, woraus sich wiederum ein Kipp- oder Klappergeräusch ergibt, welches durch eben diesen Wechsel der Anlageseite des Kolbens bedingt ist. Das Geräusch wird dabei umso lauter, je größer das Spiel zwischen dem Kolben und der Zylinderwandung ist. Um einen möglichst geräuscharmen Lauf des Kolbens zu erreichen, kommt es also darauf an, zwischen Kolben und Zylinderwand ein möglichst geringes Einbauspiel zu verwirklichen; bei Otto-Motoren liegt beispielsweise das Standard-Einbauspiel an der engsten Stelle, d.h. in dem Bereich, in welchem der Kolben den größten Durchmesser aufweist, bei etwa 25 μm.

Die Auswahl des Einbauspiels und die Einpassung eines Kolbens erweisen sich jedoch wegen der thermischen Belastung des Kolbens als schwierig. Da der Verbrennungsmotor bei allen Betriebsbedingungen, d.h. sowohl bei kaltem Motor als auch in einem stark erwärmten Zustand, einen ruhigen Lauf aufweisen soll und ferner bei allen diesen Betriebszuständen ein Klemmen oder Pressen des Kolbens verhindert werden muß, ist die Ausdehnung des Kolbens, welche bei dessen Erwärmung erfolgt, zu berücksichtigen. Es ist deshalb üblich, den Kolbenkopf, welcher den höchsten Temperaturbelastungen ausgesetzt ist, mit einem etwas geringeren Durchmesser zu versehen und den Bereich, in welchem der Kolben den größten Durchmesser aufweist und mit welchem er an der Zylinderwandung anliegt, an dem Kolbenschaft auszubilden. Durch den Abstand des größten Durchmesserbereichs von dem Feuersteg des Kolbens wirken sich die Motorbetriebstemperaturen geringer auf diesen größten Durchmesserbereich aus.

Die bisher üblicherweise verwendeten Kolben weisen ein Durchmesser-Gesamtlängenverhältnis von etwa 1 zu 1 auf, d.h. sind etwa "quadratisch" ausgebildet; Kolben kleineren Durchmessers sind teils mit einer etwas größeren Gesamtlänge versehen. Wie bekannt, unterteilt sich die Länge eines Kolbens in die Kompressionshöhe und in die untere Schaftlänge, wobei die Kompressionshöhe der Abstand zwischen der Mitte der Kolbenbolzenbohrung und der Kolbendodenkante ist, während die untere Schaftlänge die Länge von der Mitte der Kolbenbolzenbohrung bis zum Schaftende darstellt. Üblicherweise beträgt die Kompressionshöhe etwa 60% des Kolbendurchmessers.

Bei der Entwicklung immer leichterer Motoren, welche auch mit immer höheren Drehzahlen betrieben werden sollen, wurde versucht, die bewegte Masse im Motor möglichst zu reduzieren. Dabei spielt insbesondere das Gewicht des Kolbens eine entscheidende Rolle. Abgesehen von der Materialauswahl besteht bei der Gewichtsreduzierung von Kolben die Möglichkeit, die Höhe des massiven Kolbenkopfes zu verringern, d.h. die Kompressionshöhe zu verkleinern. Um eine sichere Führung des Kolbens zu gewährleisten, muß gleichzeitig die Kolbenunterschaftlänge vergrößert werden, damit die von den Seitenkräften herrührende Flächenpressung vorgegebene Werte nicht übersteigt, beispielsweise Werte, bei welchen der Ölfilm zwischen dem Kolben und dem Zylinder durchgedrückt würde. Durch die Verringerung der Kompressionshöhe verlagert sich zwangsläufig die durch die Erwärmung des Kolbenbodens hervorgerufene Wärmeeinflußzone näher an die Kolbenbolzenbohrung oder das Bolzenauge heran, so daß als notwendige Folge der größte Durchmesserbereich in den unteren Schaftbereich verschoben werden muß, wenn der Durchmesser, d.h. das engste Einbauspiel, unverändert beibehalten werden soll. Durch diese Verschiebung des Bereichs des engsten Spiels in das untere Ende des Kolbenschaftes erhöht sich unvermeidlich die Kippbewegung des Kolbens, so daß das Geräuschniveau stark ansteigt.

Um diesen Nachteilen abzuhelfen, wurde versucht, ausdehnungsmindernde Stahl-Regeleinlagen in das Aluminium-Kolbenmaterial einzubetten. Ein derartiger Kolben ist in der EP-B-171 568 beschrieben. Diese Regeleinlagen sollen dazu dienen, die Ausdehnung des Kolbenschaftes zu beeinflussen, um auf diese Weise den größten Durchmesserbereich näher an die Achse der Kolbenbolzenbohrung verlegen zu können. Durch diese Ausgestaltungsform erhöht sich allerdings zum einen der Herstellungsaufwand, insbesondere der Aufwand zum Gießen des Kolbens ganz erheblich; zum anderen kann es in der Großserienproduktion erhebliche Schwierigkeiten bereiten. Insgesamt hat sich diese Lösung nicht als völlig befriedigend erwiesen.

EP 0 494 180 B1

Der Erfindung liegt daher die Aufgabe zugrunde, einen Kolben der eingangs genannten Art zu schaffen, welcher insbesondere bei einer geringen Kompressionshöhe sowie bei einfachem Aufbau einen geräuscharmen Lauf gewährleistet.

Erfindungsgemäß wird die Aufgabe dadurch gelöst, daß die Kompressionshöhe weniger als 40% des Kolbendurchmessers beträgt, der Kolbenschaft regelstreifenfrei ausgebildet ist, und der größte Durchmesserbereich im Bereich einer zur Schafterzeugenden senkrecht verlaufenden, die Kolbenbolzenachse umfassenden Ebene liegt, wobei in Kauf genommen wird, daß das dort zulässige engste Einbauspiel größer ist als die im Stand der Technik angestrebten 25 $\mu$.

Der erfindungsgemäße Kolben zeichnet sich durch eine Reihe erheblicher Vorteile aus.

Da der größte Durchmesserbereich und somit das kleinste Einbauspiel im Bereich der Höhe der Achse der Kolbenbolzenbohrung vorgesehen ist, ist der beim Verschwenken des Kolbens am oberen bzw. unteren Totpunkt auftretende Hebelarm ausgesprochen klein, so daß die Gesamtbewegung des Kolbens in Richtung auf die Zylinderwand bzw. von dieser weg minimiert ist. Daraus ergibt sich insgesamt ein niedriges Geräuschniveau, welches zu einem ruhigen Lauf des Kolbens führt.

Ein weiterer Vorteil des erfindungsgemäßen Kolbens liegt darin, daß auf den Einbau von Stahl-Regeleinlagen verzichtet werden kann, so daß der Kolben insgesamt einfacher und damit auch kostengünstiger herstellar ist.

In einer besonders günstigen Ausführungsform der Erfindung ist vorgesehen, daß der Kolbenschaft im größten Durchmesserbereich in Form einer Ausbauchung ausgebildet ist. Diese kann in geeigneter Weise abgerundet sein, um einen gleichmäßigen Lauf und ein abrollendes Kippen des Kolbens im Bereich der Totpunkte zu ermöglichen. Ein stärker geräuscheerzeugendes Schlagen des Kolbens wird somit verhindert. Der Scheitel der Ausbauchung kann bevorrugterweise in der oben definierten horizontalen, die Kolbenbolzenachse umfassenden Ebene angeordnet sein.

In einer weiteren, besonders vorteilhaften Ausgestaltung der Erfindung ist vorgesehen, daß der Scheitel der Ausbauchung in einer horizontalen Ebene liegt, welche in einem Abstand von maxinal 8 % des Zylinderdurchmessers des zu dem Kolben passenden Zylinders unterhalb oder oberhalb der obengenannten, die Kolbenbolzenachse umfassenden horizontalen Ebene angeordnet ist. Diese geringfügige Verschiebung der Lage des größten Durchmesserbereichs nach oben oder unten ändert nichts an den vorteilhaften Wirkungen des erfindungsgemäßen Kolbens. Das Schliffbild des Kolbenschaftes oberhalb des größten Durchmesserbereichs, d.h. der Schafteinzug oberhalb dieses Bereichs, kann bei dem Erfindungsgemäßen Kolben unter Berücksichtigung der maximalen Betriebstemperatur und der vorhandenen Schaftelastizität bestimmt werden.

Um beim Kippen des Kolbens eine unerwünschte Pressung des unteren Kolbenschaftbereichs mit der Zylinderwandung zu vermeiden, ist es günstig, wenn der Kolbenschaft unterhalb des größten Durchmesserbereichs eine Krümmungsform aufweist, welche von der Zylinderwand zurückversetzt ist. Dabei erweist sich eine Krümmungsform als besonders günstig, deren Schafteinzug in %o, bezogen auf den Zylinderdurchmesser jeweils im Abstand von dem größten Durchmesserbereich bzw. dem Bereich kleinsten Einbauspiels, in %, bezogen auf die Unterlänge des Kolbens, folgender Abhängigkeit genügt:

| Abstand: | Schafteinzug: |
|----------|---------------|
| 19 | 0,046 |
| 38 | 0,185 |
| 58 | 0,393 |
| 77 | 0,648 |
| 96 | 1,481 |

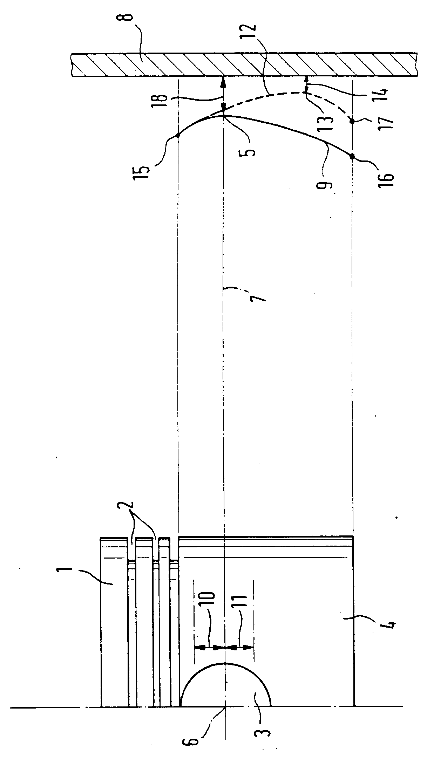

Im folgenden wird die Erfindung anhand eines Ausführungsbeispiels in Verbindung mit der Zeichnung beschrieben. Dabei zeigt die einzige Figur eine schematische Darstellung eines erfindungsgemäßen Kolbens (linke Bildhälfte) sowie eine vergrößert dargestellte Wandungskontur des erfindungsgemäßen Kolbenschaftes in Verbindung mit der Wandung eines Zylinders.

Der in der Figur schematisch dargestellte Kolben umfaßt einen Kolbenkopf 1, welcher mit zumindest einer Ringnut 2 versehen ist. Bei dem gezeigten Ausführungsbeispiel sind insgesamt drei Ringnuten vorgesehen. Der Kolben weist weiterhin einen Kolbenschaft 4 aüf, welcher mit einer Kolbenbolzenbohrung 3 versehen ist.

3

Die Kolbenbolzenachse 6 bzw. die Achse der Kolbenbolzenbohrung 3 steht bei dem gezeigten Beispiel senkrecht zur Bildebene.

In der rechten Bildhälfte der Fig. ist in schematischer Weise eine Zylinderwandung 8 dargestellt, welche in vergrößerter Darstellung bezüglich der radialen Maßverhältnisse eine Krümmungsform 9 des erfindungsgemäßen Kolbenschaftes 4 zugeordnet ist.

Die Krümmungsform 9 ist erfindungsgemäß so ausgebildet, daß der größte Durchmesserbereich 5, an welchem das kleinste Einbauspiel, d.h. der kleinste Abstand zur Zylinderfläche vorliegt, im Bereich einer zur Schafterzeugenden senkrechten, d.h. horizontalen Ebene 7 angeordnet ist, welche sich durch die Kolbenbolzenachse 6 erstreckt. Oberhalb dieses größten Durchmesserbereichs ist die Krümmungslinie 9 von der Wandung des Zylinders 8 zurückversetzt, wobei diese Zurückversetzung durch den Fachmann in geeigneter Weise ausgewählt werden kann. Unterhalb des größten Durchmesserbereichs 5 verläuft die Krümmungsform oder Krümmungslinie 9 ebenfalls in einer zurückversetzten Kontur, deren Verlauf bevorzugterweise der oben angegebenen Abhängigkeit des Abstands und des Schafteinzugs genügt.

Erfindungsgemäß ist es möglich, die Lage der genannten horizontalen Ebene, in welcher der größte Durchmesserbereich 5 angeordnet ist, parallel zu der durch die Kolbenbolzenachse 6 verlaufenden horizontalen Ebene 7, nach oben bzw. nach unten geringfügig zu versetzen, wobei die maximale Versetzung (s. Bezugsziffern 10 und 11) 8% des Zylinderdurchmessers betragen sollte.

Die erfindungsgemäße Krümmungsform oder Krümmungslinie 9 ist in der Figur in durchgezogener Linie dargestellt; weiterhin zeigt die Figur in gestrichelter Linie die Ausgestaltung einer Krümmungslinie 12, welche aus dem Stand der Technik üblich ist. Aus der Figur ergibt sich deutlich, daß bei der bekannten Krümmungslinie 12 der Bereich größten Durchmessers 13 wesentlich unterhalb der horizontalen Ebene 7, d.h. am unteren Bereich des Kolbenschaftes 4, angeordnet ist. Weiterhin macht die vergleichende Gegenüberstellung der Figur deutlich, daß das Einbauspiel 18 größer ist als das Einbauspiel 14 eines aus dem Stand der Technik bekannten Kolbens.

Die beiden Krümmungslinien 9 und 12 weisen bei den gezeigten Ausführungsbeispielen jeweils denselben oberen Endpunkt 15 auf, während der untere Endpunkt 16 der erfindungsgemäßen Krümmungslinie 9 einen größeren Abstand zu der Wandung des Zylinders 8 hat als der untere Endpunkt 17 der vorbekannten Krümmungslinie.

## Patentansprüche

1. Kolben für einen Zylinder eines Verbrennungsmotors mit
   - einem mit zumindest einer Kolbenringnut (2) versehenen Kolbenkopf (1), sowie
   - einem eine Kolbenbolzenbohrung (3) besitzenden Kolbenschaft (4), welcher einen größten Durchmesserbereich (5) aufweist,
   dadurch **gekennzeichnet,** daß
   - die Kompressionshöhe weniger als 40% des Kolbendurchmessers beträgt,
   - der Kolbenschaft (4) regelstreifenfrei ausgebild ist, und
   - der größte Durchmesserbereich (5) im Bereich einer zur Schafterzeugenden senkrecht verlaufenden, die Kolbenbolzenachse (6) umfassenden Ebene (7) liegt.

2. Kolben nach Anspruch 1,
   dadurch **gekennzeichnet,** daß der Kolbenschaft (4) im größten Durchmesserbereich (5) in Form einer Ausbauchung ausgebildet ist.

3. Kolben nach Anspruch 2,
   dadurch **gekennzeichnet,** daß der Scheitel der Ausbauchung in der senkrecht zur Schafterzeugenden verlaufenden Bolzenachsen-Ebene (7) angeordnet ist.

4. Kolben nach Anspruch 2,
   dadurch **gekennzeichnet,** daß der Scheitel der Ausbauchung in einer senkrecht zur Schafterzeugenden liegenden Ebene liegt, welche maximal 8% des Zylinderdurchmessers des zu dem Kolben passenden Zylinders (8) unterhalb oder oberhalb der Bolzenachsen-Ebene (7) angeordnet ist.

5. Kolben nach einem der Ansprüche 1 bis 4,
   dadurch **gekennzeichnet,** daß der Kolbenschaft (4) unterhalb des größten Durchmesserbereichs (5) eine Krümmungsform (9) aufweist, deren Schafteinzug in %o, bezogen auf den Zylinderdurchmesser des zu dem Kolben passenden Zylinders (8) im jeweiligen Abstand unterhalb der Bolzenachsen-Ebene (7) des größten Durchmesserbereichs (5) in %, bezogen auf die Unterlänge des Kolbens, folgender Zuordnung genügt:

| Abstand: | Schafteinzug: |
|---|---|
| 19 | 0,046 |
| 38 | 0,185 |
| 58 | 0,393 |
| 77 | 0,648 |
| 96 | 1,481 |

**Claims**

1. A piston for a cylinder of an internal combustion engine comprising
   - a piston head (1) formed with at least one annular groove (2) and
   - a shaft (4) having a piston pin bore (3) and a maximum diameter region (5),
   characterised in that
   - the compression height is less than 40% of the piston diameter,
   - the shaft (4) is free from regulating strips, and
   - the maximum diameter region (5) is in the region of a plane (7) extending at right angles to the shaft generatrix and including the piston pin axis (6).

2. A piston according to claim 1, characterised in that the shaft (4) in the maximum diameter region (5) has a bulge.

3. A piston according to claim 2, characterised in that the apex of the bulge is situated in the pin-axis plane (7) at right angles to the shaft generatrix.

4. A piston according to claim 2, characterised in that the apex of the bulge is in a plane at right angles to the shaft generatrix and at a distance above or below the pin axis plane (7) up to 8% of the diameter of the cylinder (8) matching the piston.

5. A piston according to any of claims 1 to 4, characterised in that the shaft (4), below the maximum diameter region (5), has a curved shape (9) with a percentage taper, relative to the diameter of the cylinder (8) matching the piston, at the respective distance below the piston pin plane (7) of the greatest diameter region (5), is related as follows to the lower length of the piston:

| Distance: | Taper of shaft: |
|---|---|
| 19 | 0.046 |
| 38 | 0.185 |
| 58 | 0.393 |
| 77 | 0.648 |
| 96 | 1.481 |

**Revendications**

1. Piston pour un cylindre de moteur à combustion interne, avec
   - une tête de piston (1) pourvue d'au moins une gorge de piston (2) ainsi que,
   - une jupe de piston (4) comportant un perçage de tige de piston (3) et présentant une zone (5) de diamètre maximal.

   caractérisé en ce que,
   - la hauteur de compression est inférieure à 40 % du diamètre du piston,
   - la jupe de piston (4) est réalisée sans frette de réglage de la dilatation, et
   - la zone (5) de diamètre maximal est située dans la zone d'un plan (7), s'étendant perpendiculairement par rapport à la génératrice de la jupe et comprenant l'axe de la tige de piston (6).

2. Piston selon la revendication 1, caractérisé en ce que la tige de piston (4) est réalisée, dans la zone (5) de diamètre maximal, sous la forme d'un bombement.

3. Piston selon la revendication 2, caractérisé en ce que le sommet du bombement est disposé dans le plan (7) passant par l'axe de la tige de piston et orienté perpendiculairement par rapport à la génératrice de la jupe.

4. Piston selon la revendication 2, caractérisé en ce que le sommet du bombement est situé dans un plan orienté perpendiculairement par rapport à la génératrice de jupe et disposé, au maximum, à une distance de 8 % du diamètre du cylindre (8) s'adaptant au piston, au-dessous ou au-dessus du plan (7) passant par l'axe de tige.

5. Piston l'une des revendications 1 à 4, caractérisé en ce que la jupe de piston (4) présente, au-dessous de la zone (5) à diamètre maximal, une forme de courbure (9) dont la contraction de la jupe, exprimée en %, par rapport au diamètre du cylindre (8) s'adaptant au piston, mesurée à la distance spécifique au-dessous du plan (7) passant par l'axe de tige, de la zone (5) à diamètre maximal, cette longueur étant exprimé en % de la longueur, orientée vers le bas, du piston, satisfait à l'association suivante :

| Espacement : | contraction du piston : |
|---|---|
| 19 | 0,046 |
| 38 | 0,185 |
| 58 | 0,393 |
| 77 | 0,648 |
| 96 | 1,481 |